# EUROPEAN PATENT SPECIFICATION

(11) **EP 0 855 602 B1**
(45) Date of publication and mention of the grant of the patent: **26.03.2008**
(21) Application number: 98101370.9
(22) Date of filing: 27.01.1998
(51) Int. Cl.: G02B 1/04, G02B 5/20

(54) **Use of moulded synthetic resin as a light-transmitting filter in display devices.**
Verwendung von Kunstharzformkörpern als Lichtfilter für Anzeigevorrichtungen
Utilisation d'article moulés en résine synthétique comme une filtre transmettant la lumiere pour dispositifs d'affichage

(30) Priority: 28.01.1997 JP 1370697
(43) Date of publication of application: 29.07.1998
(73) Proprietor: Kyowa Hakko Chemical Co., Ltd., Tokyo 103-0022 (JP); YAMAMOTO KOGAKU CO., LTD., Higashiosaka-shi, Osaka-fu (JP)
(72) Inventor: Matsushita, Shoshiro, Yokkaichi-shi, Mie-ken (JP); Shimizu, Ikuo, Yokkaichi-shi, Mie-ken (JP); Mabuchi, Kazuko, Higashiosaka-shi, Osaka-fu (JP); Ishiba, Yoshihisa, Daito-shi, Osaka-fu (JP); Murata, Oritoshi, Higashiosaka-shi, Osaka-fu (JP)
(74) Representative: Vossius & Partner

(56) References cited:
- EP-A- 0 756 183

## Description

The present invention relates to the use of a molded synthetic resin for light transmitting filters, which can reduce the glare of light and can provide a clear color sense, while retaining the lightness in the field of vision.

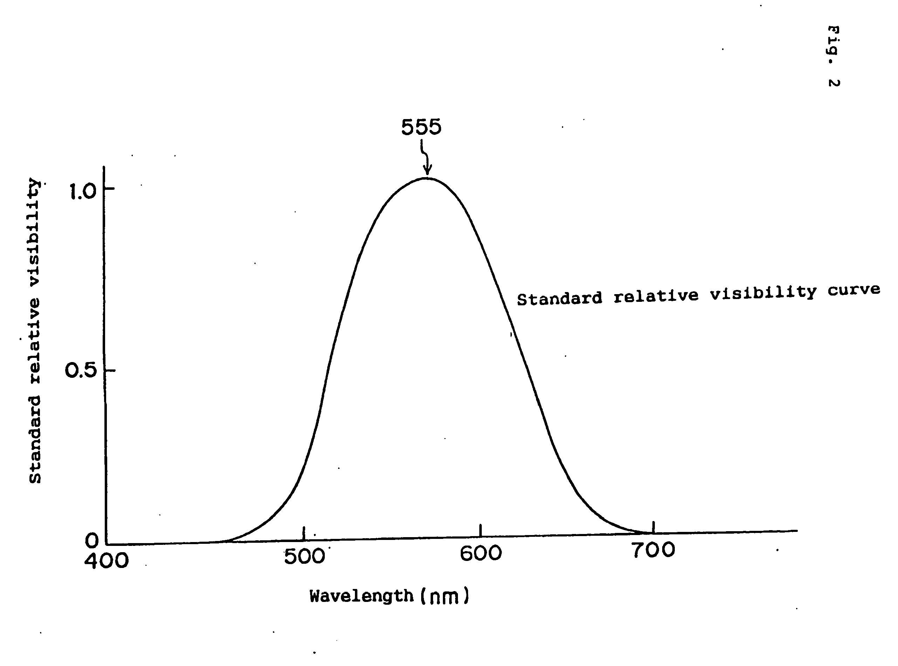

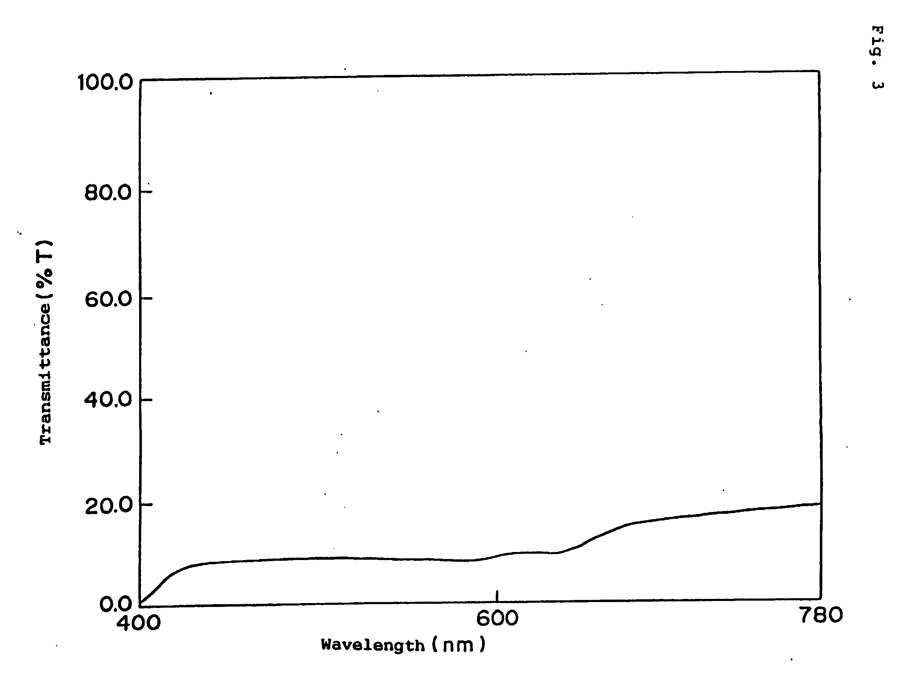

It is known that ultraviolet light or other light having potential influences on the eyes is emitted from a screen of the CRT such as those of a personal computer, a word processor or the like. In order to shut up such light, there has been used a filter attached to a front surface of the screen. As such a filter, there is a filter having an effect for preventing reflected light from the front of the screen. In addition, there is a filter that can cut off ultraviolet light, or reduce the transmittance of light to reduce glare of the screen. In this respect, these functions are common to those of the conventional sunglasses which are used for controlling the transmission of the sunlight. In general, sunglasses are produced under a design for decreasing the transmittance of light in the vicinity of the central wavelength on the standard relative visibility curve (Figure 2) to reduce the glare. In the conventional sunglasses, however, the transmittance of light over the other range of wavelength is also decreased as shown in Figure 3. For this reason, when the sunglasses are used under the conditions that the amount of light is small such as in the twilight, the whole field of vision may become dark, and it may, therefore, be difficult to observe an object in open air. In other words, the attempt at reducing the glare may result in an excessive decrease in the amount of transmitted light all over the range of wavelength, thereby causing a problem that the object cannot be fully observed.

As the sunglasses which can exhibit non-glaring effects by decreasing the transmittance of light in the vicinity of the central wavelength on the standard relative visibility curve, while retaining the lightness in the whole field of vision, there are well known sunglasses which are made of a glass material containing neodymium or didymium for absorption of light in the vicinity of 590 nm. From the viewpoint of easy handling, however, synthetic resins such as plastics, particularly polycarbonate with high impact resistance, rather than glasses are preferred as the base material. There has been, however, no plastic lens complying with such requirements, particularly made of polycarbonate. JP-B 53-39910 discloses a lens for eyeglasses, which can absorb light over a wide range of wavelength extending from 550 to 600 nm with good visibility. The lens of this type for eyeglasses is made of diethylene glycol bisallylcarbonate (CR-39) as the base material; however, if this material is made into polycarbonate, the resulting material will be difficult to be colored with a dye. Furthermore, the above lens for eyeglasses exhibits a gradual decrease in the transmittance of light over the wavelength range of about 550 to 650 nm (yellow to orange color). If the transmittance of yellow light is decreased for the purpose of enhancing non-glaring effects, the transmittance of orange light is also decreased with such a decrease

Furthermore, when the filter for the CRT having an equivalent structure to that of the aforementioned lens for eyeglasses where the transmittance of light is gradually decreased in a yellow to orange region is made and used, the amount of whole transmitted light may be excessively decreased where the CRT screen displays a colorful moving image such as today's television games and, thereby, in some cases, color may become hard to be discriminated and the object image cannot be clearly perceived.

Thus, it is the object of the present invention to provide a molded synthetic resin, which can reduce the glare of light and can provide a clear color sense, while retaining the lightness in the field of vision. This object has been achieved by the surprising finding that the above problems can be solved by reducing the transmittance of light over a particular wavelength range.

The present invention is directed to the use of a molded material, which is made of a synthetic resin base material comprising an organic dye with an absorption maximum in the vicinity of the central wavelength on the standard relative visibility curve, as well as an ultraviolet light absorbing agent and a blue light absorbing agent, the base material having a transmittance minimum in the range of wavelength extending from 550 to 585 nm on the transmittance curve, the transmittance of light at the transmittance minimum being not greater than 25%, the average transmittance of light over the range of wavelength extending from 590 to 660 nm being not less than 15%, and the average transmittance over the range of wavelength extending from 470 to 550 nm being not less than 10% for the preparation of a light transmitting filter that is used as a part of an electric display device of a color image displaying device or as a part of a color image observing system chosen from observation platforms or a window for prospect in sightseeing buses, or used in combination with the above device or system. The above molded material may further comprise an infrared light absorbing or reflecting agent.
Figure 1 is a graph showing the spectral transmittance of light through the molded synthetic resin obtained in Example 1.
Figure 2 is a graph showing the standard relative visibility curve.
Figure 3 is a graph showing the pattern of the transmittance of light through the most popular conventional sunglasses. ,
Figure 4 is a graph showing the spectral transmittance of light through the molded synthetic resin obtained in Example 2.
Figure 5 is a graph showing the spectral transmittance of light through the molded synthetic resin obtained in Example 3.
Figure 6 is a graph showing the spectral transmittance of light through the molded synthetic resin obtained in Example 4.
Figure 7 is a graph showing the spectral transmittance of light through the molded synthetic resin obtained in Example 5.
Figure 8 is a graph showing the spectral transmittance of light through the molded synthetic resin obtained in Example 6.

As used herein, the term "the central wavelength on the standard relative visibility curve" refers to the wavelength of about 555 nm, and the term "the vicinity of the central wavelength on the standard relative visibility curve" refers to the range of wavelength extending from about 530 to 585 nm. As the organic dye with an absorption maximum in the vicinity of the central wavelength on the standard relative visibility curve, any squarylium compound of formula (I): 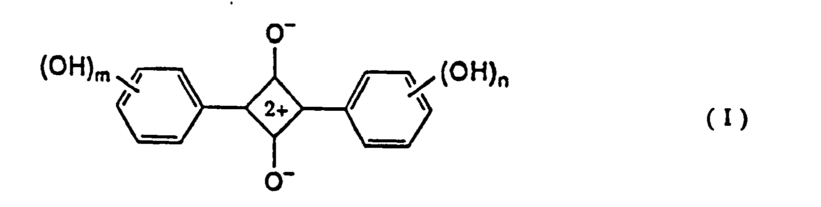 [wherein m and n are the same or different and represent integers of 1 to 4] is preferred [the compound of formula (I) is hereinafter referred to as compound (I), and this rule is also applied to the other compounds with formula numbers].

Since neodymium and didymium, which have been used in the conventional glass as a dye for light absorption, are inorganic materials, they can be incorporated in the form of metal ions into glass lenses formed by fusion at high temperatures; however, they cannot be used with any synthetic resin because they are not fully dispersed, when mixed with the synthetic resin, which is due to their incompatibility with the molten resin. In the present invention, the above squarylium compound is compatible with the molten resin, and by the use of this compound as a light absorbing agent, it becomes possible to reduce the glare of light. For reduction of glare, the use of an organic dye with an absorption maximum at 555 nm is most preferred as an ideal case; however, such is not necessarily required, and as long as the absorption peak is in the vicinity of 555 nm, the organic dye can fairly well absorb light in the vicinity of the central wavelength on the standard relative visibility curve because the absorption peak has a width to a certain extent, thereby making it possible to reduce the glare without any problem in practical use.

The above squarylium compounds per se are well known in the art and can be produced by or in accordance with the method as described, for example, in Angew. Chem. Internat. Edit., 7, 530-535 (1968) and Liebigs Ann. Chem., 712, 123 (1968).

As the ultraviolet light absorbing agent, for example, JF-86 from Johoku Chemical Co., Ltd. or Seesorb 705 from Sipro Kasei Co., Ltd. can be used

As the blue light absorbing agent, for example, Kayaset Yellow A-G from Nippon Kayaku Co., Ltd. or PS Orange GG from Mitsui Toatsu Dyes, Ltd. can be used.

As the infrared light absorbing or reflecting agent, for example, IR750 from Nippon Kayaku Co., Ltd. or IR Additive 200 from Dainippon Ink & Chemicals, Inc. can be used.

As the synthetic resin base material for a molded synthetic resin, polycarbonate is most preferred because of its excellent impact resistance. In addition, polymethyl methacrylate (PMMA), CR-39 (PPG Industries, Inc. in USA), or cellulose plastics such as cellulose acetate or cellulose propionate can also be used.

The color image displaying device includes an electric display device. As used herein, the term "the electric display device" includes, but is not limited to, a luminescent type of electric display device such as a cathode ray tube (CRT), a vacuum fluorescent display (VFD), an electroluminescent panel (ELP), a light emitting diode (LED), a plasma display panel (PDP), an incandescent lamp (ICL), a laser display and the like, as well as a non-luminescent type of electric display device such as a liquid crystal display (LCD), an electrochromic display (ECD) and the like. Examples of displaying mode of such an electric display device include direct view type as in the cathode ray tube, projection type (including front- and rear-projection types) as in a projection-type liquid crystal display, and off-screen type, a representative of which is holography. When the molded synthetic resin according to the present invention is used as the light transmitting filter for the color image in the above electric display device, the relatively high effect may be exhibited. When the color image is a vigorously moving image such as in the television games, the higher effect can be seen.

As used herein, the term "the electric display device" may further include a traffic signal and a back light or a brake lamp of cars.

As used herein, the term "the color image observing system" includes an observation platform and a window for prospect in sightseeing buses.

The requirements that the lens should have a transmittance minimum in the range of wavelength extending from 550 to 585 nm on the transmittance curve and that the transmittance of light at the transmittance minimum should be not greater than 25% are for decreasing the transmittance of light over the range of wavelength in the visible light where the greatest glare is given to the eyes. It is preferred that the transmittance of light at the transmittance minimum is not greater than 20%, more preferably not greater than 15%.

The requirement that the average transmittance of light over the range of wavelength extending from 590 to 660 nm should be not less than 15% is for retaining the transmittance of orange light, which is preferably not less than 20%. In addition, it is preferred that the molded resin has a transmittance maximum in the range of wavelength extending from 590 to 660 nm on the transmittance curve and the transmittance of light at the transmittance maximum is not less than 30%, most preferably not less than 35%. These latter requirements can be effectively achieved by incorporating an infrared light absorbing or reflecting agent, in addition to the organic dye with an absorption maximum in the vicinity of the central wavelength on the standard relative visibility curve, the ultraviolet light absorbing agent, and the blue light absorbing agent, into the synthetic resin base material. Thus the appropriate color balance of the whole transmitted light can be given by preventing the excess transmission of red light, while retaining the transmittance of orange light at a high level.

The requirement that the average transmittance of light over the range of wavelength extending from 470 to 550 nm should be not less than 10% is for obtaining the color balance of transmitted light and the lightness in the filed of vision. In particular, it is preferred that the transmittance of light at any wavelength in the range of wavelength extending from 470 to 550 nm is not less than 15%, most preferably not less than 20%.

The transmittance of light in the range of wavelength extending from 400 to 450 nm is preferably made substantially equal to zero by a blue light absorbing agent.

The reasons why not only the glare of light can be ameliorated, but also the color balance and color contrast can be improved by the aforementioned limitation of each transmittance of light, when the molded synthetic resin is used as the light transmitting filter, may be contemplated as follows.

First, absorption and extinction of light over the range of wavelength extending from 550 to 585 nm not only suppress glare but also generate a continuous gap in visual system responses between red and green colors, which results in easy discrimination between red and green colors. This is based on the same reason why it may be assumed that adjacent colors in a rainbow are easily discriminated supposed that there is a somewhat dark portion on the boundary, although the boundary usually cannot be clearly perceived. On the other hand, blue light tends to be scattered not only by dust or water vapor in the atmosphere but also in eyeballs, and this is responsible for reduction in the clearness of the field of vision. The inclusion of the blue light absorbing agent for extinction in blue light leads to balance between the transmittance of yellow light and that of blue light and totally enhances the clearness. Moreover, as a result, the color balance between red, yellow, green, and blue can be realized, and also the color contrast can be emphasized.

The following will describe an example of the molded synthetic resin used according to the present invention.

The molded synthetic resin can be obtained by adding an organic dye with an absorption maximum in the vicinity of the central wavelength on the standard relative visibility curve as described above, an ultraviolet light absorbing agent, a blue light absorbing agent, and an infrared light absorbing or reflecting agent to a synthetic resin raw material as the base material of the molded synthetic resin, followed by mixing and then forming into shape of the molded synthetic resin by extrusion or injection molding to ensure that the additives are uniformly dispersed all over the base materials. Some of the additives such as absorbing agents, e.g., infrared light reflecting agent, can also be coated on the surface of the molded synthetic resin by vacuum deposition or the like.

The content of the organic dye is preferably in the range of 0.0001% to 0.01% by weight, most preferably 0.0005% to 0.005% by weight, based on the synthetic resin base material as the base material of the molded synthetic resin. The content of the ultraviolet light absorbing agent is preferably in the range of 0.1% to 1.0% by weight, most preferably 0.3% to 0.8% by weight, based on the synthetic resin base material. The content of the blue light absorbing agent is preferably in the range of 0.001% to 0.02% by weight, most preferably 0.002% to 0.01% by weight, based on the synthetic resin base material. The content of the infrared light absorbing or reflecting agent is preferably in the range of 0.001% to 0.05% by weight, most preferably 0.001% to 0.02% by weight, based on the synthetic resin base material.

Upon the use of the present invention, a polarizing element can also be used in combination with the molded synthetic resin. The molded synthetic resin into which a polarizing agent is incorporated can also be produced by insert molding, lamination using adhesives or the like to use. The term herein referred to as "the polarizing element" means a polarizing film per se or the film onto which the plastic sheet or sheets are laminated on either one or both surfaces thereof to form into one piece. When insert molding is employed, a polarizing element onto which the plastic sheet or sheets are laminated on one or both surfaces to form a one piece, is inserted into a mold, which is then used for injection molding to form the polarizing element and the resin into one piece.

A decrease in the transmittance of light through the molded synthetic resin, which may be caused by combination of the polarizing element and the synthetic resin base material, or by incorporation of the polarizing element, can be recovered, for example, by changing the content of a dye to be incorporated, so that the transmittance of light and the transmittance curve with respect to the molded synthetic resin are included within the scope of the present invention.

The present invention will be further illustrated by the following examples; however, the present invention is not limited to these examples.

### Example 1

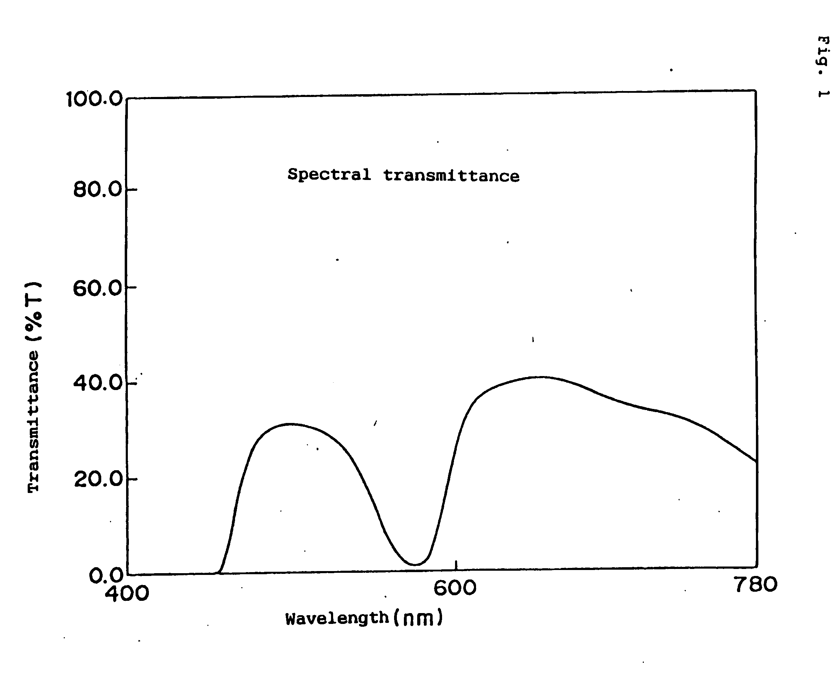

The ingredients listed below were mixed and formed into a sheet having an outer dimension of 255 mm X 330 mm and a thickness of 2 mm by an injection molding machine at a regulated temperature of 250°C to 300°C. The spectral transmittance of light through the sheet thus obtained is shown in Figure 1. When this sheet was hanged in parallel with a front surface of the CRT screen and the television game was continued on the screen, it gave no sense of glare, and slight sense of fatigue even in a case of a long time game. Furthermore, it became easy to discriminate the colors of blue, green, yellow, and red, and the color contrast also became clear.

| | |
|---|---|
| Polycarbonate resin [H-3000FN from Mitsubishi Engineering Plastics Co., Ltd.] | 15 kg |
| Ultraviolet light absorbing agent [JF-86 from Johoku Chemical Co., Ltd.] | 60 g |
| Blue light absorbing agent [Kayaset Yellow A-G from Nippon Kayaku Co., Ltd.] | 1.05 g |
| Infrared light absorbing agent [IR Additive 200 from Dainippon Ink & Chemicals, Inc.] | 1.84 g |
| Compound (1) | 0.24 g |

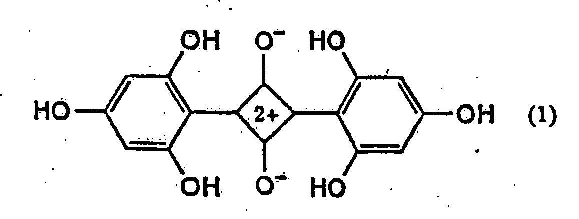

### Example 2

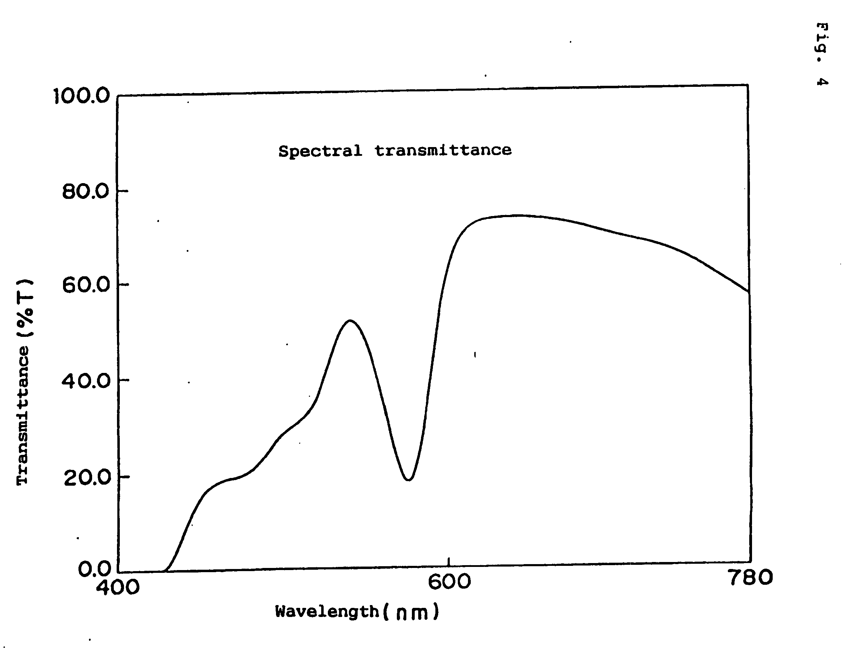

The mixture of ingredients listed below was formed into a continuous sheet having a thickness of 2 mm by the above injection molding machine at a regulated temperature of 250°C to 300°C, and this sheet was cut into a sheet having an outer dimension of 550 mm X 700 mm. The spectral transmittance of light through the sheet thus obtained is shown in Figure 4. When this sheet was hanged in parallel with the front surface of the commercial game machine and the television game was continued on the screen based on a game software, it gave no sense of glare even in a case of a glittering screen, and slight sense of fatigue even in a case of a long time game. Furthermore, it became easy to discriminate the colors of blue, green, yellow, and red, and the color contrast also became clear.

| | |
|---|---|
| Polycarbonate resin [H-3000FN | 60 kg |
| from Mitsubishi Engineering Plastics Co., Ltd.] Ultraviolet light absorbing agent [JF-86 | 240 g |
| from Johoku Chemical Co., Ltd.] Blue light absorbing agent [PS Orange GG | 2 g |
| from Mitsui Toatsu Dyes, Ltd.] Infrared light absorbing agent [IR750 | 1.04 g |
| from Nippon Chemicals Co., Ltd.] | |
| Compound (1) | 0.6 g |

### Example 3

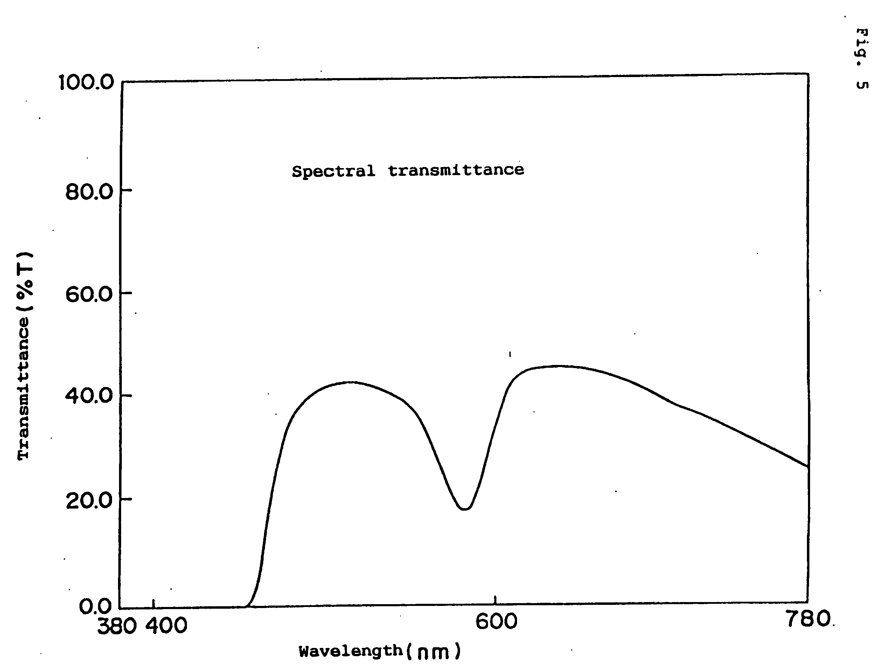

The mixture of ingredients listed below was formed into a sheet having an outer dimension of 255 mm X 330 mm and a thickness of 2 mm by the injection molding machine at a regulated temperature of 250°C to 300°C. The spectral transmittance of light through the sheet thus obtained is shown in Figure 5. When this sheet was hanged in parallel with the front surface of the CRT screen and the television game was continued on the screen, it gave no sense of glare, and slight sense of fatigue even in a case of a long time game. Furthermore, it became easy to discriminate the colors of blue, green, yellow, and red, and the color contrast also became clear.

| | |
|---|---|
| Polycarbonate resin [H-3000FN from Mitsubishi Engineering Plastics Co., Ltd.] | 15 kg |
| Ultraviolet light absorbing agent [JF-86 from Johoku Chemical Co., Ltd.] | 60 g |
| Blue light absorbing agent [Kayaset Yellow A-G from Nippon Kayaku Co., Ltd.] | 0.75 g |
| Infrared light absorbing agent [IR750 | 0.96 g |
| from Nippon Chemicals Co., Ltd.] | |
| Compound (2) | 0.15 g |

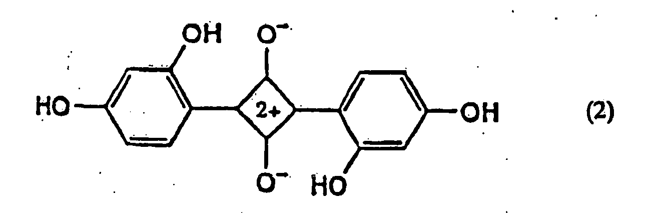

### Example 4

The polarizing element prepared by punching the polarizing film onto which a polycarbonate sheet was laminated on both surfaces [Eupironpola from Mitsubishi Engineering Plastics Co., Ltd., 0.8 mm thickness] so as to fit in the shape of the molded synthetic resin was stably placed on a surface of a mold.

| | |
|---|---|
| Polycarbonate resin [H-3000FN from Mitsubishi Engineering Plastics Co., Ltd.] | 15 kg |
| Ultraviolet light absorbing agent [JF-86 from Johoku Chemical Co., Ltd.] | 60 g |
| Blue light absorbing agent [PS Orange GG from Mitsui Toatsu Dyes, Ltd.] | 0.4 g |
| Infrared light absorbing agent [IR 750 from Nippon Chemicals Co., Ltd.] | 0.78 g |
| Compound (1) | 0.42 g |

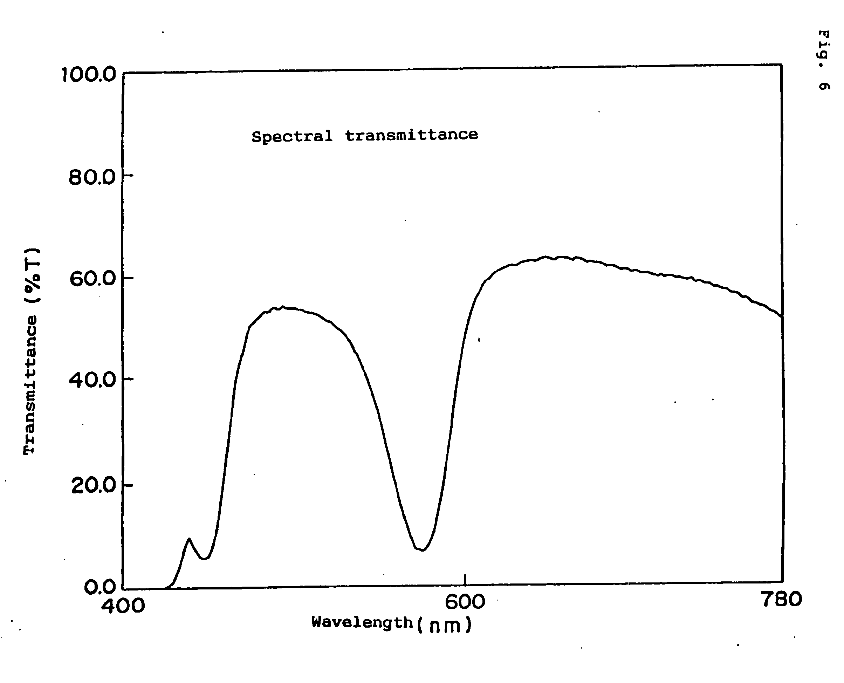

The above mixture was formed into a sheet in which the polarizing element and the injected resin were incorporated into one piece and having an outer dimension of 225 mm X 330 mm and a thickness of 2 mm by the above injection molding machine at a regulated temperature of 250°C to 300°C. The spectral transmittance of light through the sheet thus obtained is shown in Figure 6. When this sheet was hanged in parallel with the front surface of the CRT screen and the television game was continued on the screen, it gave no sense of glare even in a case of a glittering screen, and slight sense of fatigue even in a case of a long time game. Furthermore, it became easy to discriminate the colors of blue, green, yellow, and red, and the color contrast also became clear.

### Example 5

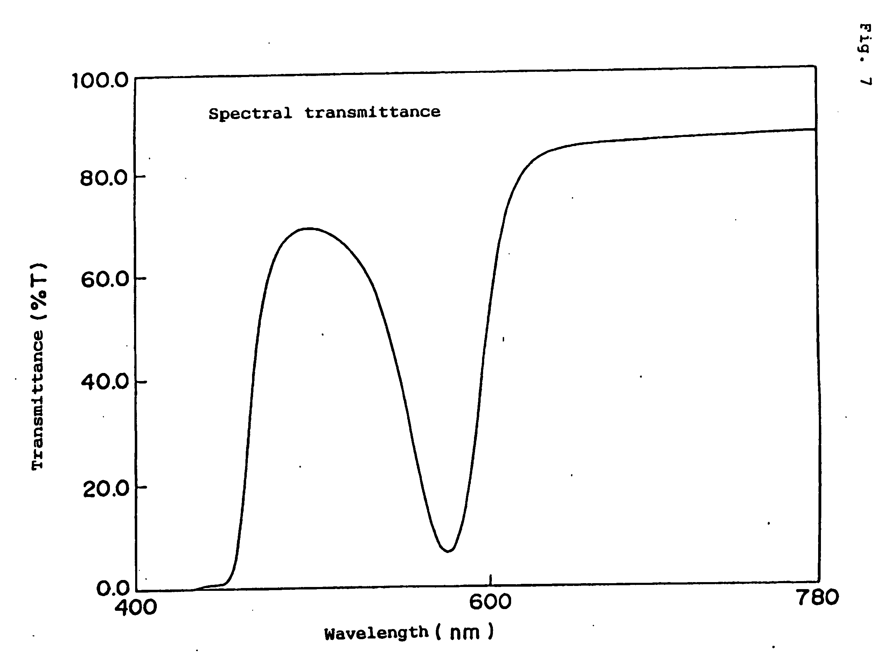

The mixture of ingredients listed below was formed into a sheet having an outer dimension of 255 mm X 330 mm and a thickness of 2 mm by the injection molding machine at a regulated temperature of 250°C to 300°C. The spectral transmittance of light through the sheet thus obtained is shown in Figure 7. When this sheet was hanged in parallel with the front surface of the CRT screen and the television game was continued on the screen, it gave no sense of glare, and slight sense of fatigue even in a case of a long time game. Furthermore, it became easy to discriminate the colors of blue, green, yellow, and red, and the color contrast also became clear.

| | |
|---|---|
| Polycarbonate resin [H-3000FN from Mitsubishi Engineering Plastics Co., Ltd.] | 15 kg |
| Ultraviolet light absorbing agent [JF-86 from Johoku Chemical Co., Ltd.] | 60 g |
| Blue light absorbing agent [Kayaset Yellow A-G from Nippon Kayaku Co., Ltd.] | 0.5 g |
| Compound (1) | 0.17 g |

### Example 6

The polarizing element prepared by punching the polarizing film onto which the polycarbonate sheets were laminated on both surfaces [Eupironpola from Mitsubishi Engineering Plastics Co., Ltd., 0.8 mm thickness] so as to fit in the shape of the molded synthetic resin was stably placed on the surface of a mold.

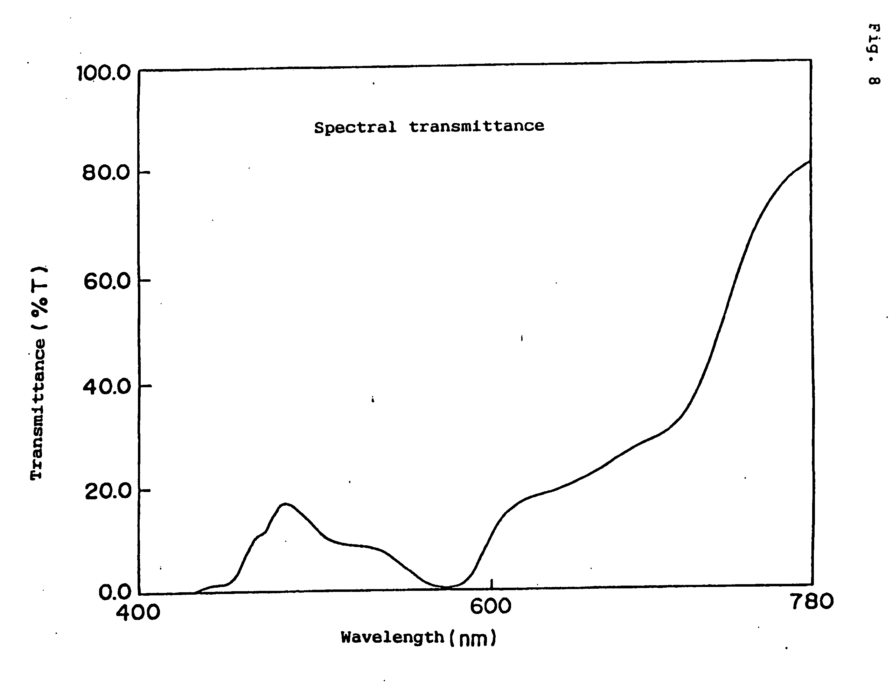

The mixture of ingredients listed below was formed into a lens in which the polarizing element and the injected resin were incorporated into one piece and having an outer dimension of 255 mm X 330 mm and a thickness of 2 mm by the injection molding machine at a regulated temperature of 250°C to 300°C. The spectral transmittance of light through the sheet thus obtained is shown in Figure 8. When this sheet was adhered to a window glass and the outside scenery was seen therethrough, it gave no sense of glare. Furthermore, it became easy to discriminate the colors of blue, green, yellow, and red, and the color contrast also became clear.

| | |
|---|---|
| Polycarbonate resin [H-3000FN from Mitsubishi Engineering Plastics Co., Ltd.] | 15 kg |
| Ultraviolet light absorbing agent [JF-86 from Johoku Chemical Co., Ltd.] | 60 g |
| Blue light absorbing agent [PS Orange GG from Mitsui Toatsu Dyes, Ltd.] | 0.4 g |
| Compound (1) | 0.36 g |

## Claims

1. Use of a molded material, which is made of a synthetic resin base material comprising an organic dye with an absorption maximum in the vicinity of the central wavelength on the standard relative visibility curve, as well as an ultraviolet light absorbing agent and a blue light absorbing agent, the base material having a transmittance minimum in the range of wavelength extending from 550 to 585 nm on the transmittance curve, the transmittance of light at the transmittance minimum being not greater than 25%, the average transmittance of light over the range of wavelength extending from 590 to 660 nm being not less than 15%, and the average transmittance of light over the range of wavelength extending from 470 to 550 nm being not less than 10% for the preparation of a light transmitting filter that is used as a part of an electric display device of a color image displaying device or as a part of a color image observing system chosen from observation platforms or a window for prospect in sightseeing buses, or used in combination with the above device or system.

2. Use of a molded material according to claim 1, which comprises an infrared light absorbing or reflecting agent, and has a transmittance maximum in the range of wavelength extending from 590 to 660 nm on the transmittance curve, the transmittance of light at the transmittance maximum being not less than 30%, and the transmittance of light at any wavelength in the range of wavelength extending from 470 to 550 nm being not less than 15%.

3. Use of a molded material according to claim 1 or 2, wherein the organic dye with an absorption maximum in the vicinity of the central wavelength on the standard relative visibility curve is a squarylium compound of formula (I): 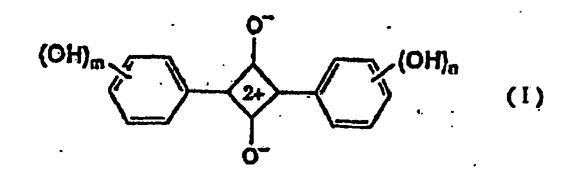 wherein m and n are the same of different and represent integers of 1 to 4.

4. Use of a molded material according to claim 1, 2, or 3, wherein a polarizing element is formed with the synthetic resin base material into one piece.

5. Use of a molded material according to claim 1, 2, 3, or 4, wherein the color image observing system is a window for prospect in sightseeing buses.

6. Use of a molded material according to claim 1, 2, 3, or 4, wherein the electric display device of a color image displaying device is a cathode ray tube, a vacuum fluorescent display, an electroluminescent panel, a light emitting diode, a plasma display panel, an incandescent lamp, a laser display, a liquid crystal display or an electrochromic display.

## Patentansprüche

1. Verwendung eines geformten Materials, bestehend aus einem synthetischen Harz-Grundstoff, welcher einen organischen Farbstoff mit einem Absorptionsmaximum in der Nähe der zentralen Wellenlänge auf der Standardkurve der relativen Sichtbarkeit, einen UV-Licht absorbierenden Stoff und einen blaues Licht absorbierenden Stoff umfasst, wobei der Grundstoff ein Durchlässigkeitsminimum im Wellenlängenbereich von 550 bis 585 nm auf der Durchlässigkeitskurve besitzt, die Lichtdurchlässigkeit am Durchlässigkeitsminimum nicht größer als 25 % ist, die mittlere Lichtdurchlässigkeit im Wellenlängenbereich von 590 bis 660 nm nicht geringer als 15 % ist und die mittlere Lichtdurchlässigkeit im Wellenlängenbereich von 470 bis 550 nm nicht geringer als 10 % ist, zur Herstellung eines lichtdurchlässigen Filters, welcher als Teil einer elektrischen Anzeigevorrichtung einer Farbbilder anzeigenden Vorrichtung oder als Teil eines Farbbild-Überwachungssystems, ausgewählt aus Überwachungsplattformen oder einem Sichtfenster in Besichtigungsbussen, oder in Verbindung mit der/dem oben genannten Vorrichtung oder System verwendet wird.

2. Verwendung eines geformten Materials gemäß Anspruch 1, welches ein Infrarotlicht absorbierendes oder reflektierendes Mittel enthält und welches ein Durchlässigkeitsmaximum im Wellenlängenbereich von 590 bis 660 nm auf der Durchlässigkeitskurve besitzt, wobei die Lichtdurchlässigkeit am Durchlässigkeitsmaximum nicht geringer als 30 % ist und die Lichtdurchlässigkeit bei jeder Wellenlänge im Wellenlängenbereich von 470 bis 550 nm nicht geringer als 15 % ist.

3. Verwendung eines geformten Materials gemäß Anspruch 1 oder 2, wobei der organische Farbstoff mit einem Absorptionsmaximum in der Nähe der zentralen Wellenlänge auf der Standardkurve der relativen Sichtbarkeit eine Squaryliumverbindung der Formel (I) ist: 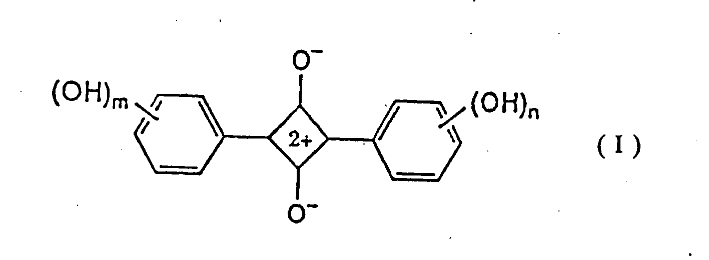 wobei m und n gleich oder verschieden sind und ganze Zahlen von 1 bis 4 darstellen.

4. Verwendung eines geformten Materials gemäß Anspruch 1, 2 oder 3, wobei ein polarisierendes Element mit dem synthetischen Harz-Grundstoff in einem Stück geformt wird.

5. Verwendung eines geformten Materials gemäß Anspruch 1, 2, 3 oder 4, wobei das Farbbild-Überwachungssystem ein Sichtfenster in Besichtigungsbussen ist.

6. Verwendung eines geformten Materials gemäß Anspruch 1, 2, 3 oder 4, wobei die elektrische Anzeigevorrichtung einer Farbbilder anzeigenden Vorrichtung eine Kathodenstrahlröhre, ein Vakuumfluoreszenzdisplay, ein elektrolumineszierendes Paneel, eine lichtemittierende Diode, ein Plasmabildschirm, eine Glühlampe, ein Laserdisplay, ein Flüssigkristalldisplay oder ein elektrochromes Display ist.

## Revendications

1. Utilisation d'un matériau moulé, qui est fait d'un matériau de base de résine synthétique comprenant un colorant organique ayant un maximum d'absorption au voisinage de la longueur d'onde centrale sur la courbe de visibilité relative standard, ainsi qu'un agent absorbant la lumière ultraviolette et un agent absorbant la lumière bleue, le matériau de base ayant un minimum de transmittance dans la plage de longueur d'onde s'étendant de 550 à 585 nm sur la courbe de transmittance, la transmittance de lumière au minimum de transmittance n'étant pas supérieure à 25%, la transmittance moyenne de lumière sur la plage de longueur d'onde s'étendant de 590 à 660 nm étant non inférieure à 15%, et la transmittance moyenne de lumière sur la plage de longueur d'onde s'étendant de 470 à 550 nm étant non inférieure à 10% pour la préparation d'un filtre transmettant de la lumière qui est utilisé comme partie d'un dispositif d'affichage électrique d'un dispositif affichant des images en couleur ou comme partie d'un système d'observation des images en couleur choisi parmi les plates-formes d'observation ou d'une fenêtre pour une vision dans des bus de tourisme, ou utilisé en combinaison avec le dispositif ou système ci-dessus.

2. Utilisation d'un matériau moulé selon la revendication 1, qui comprend un agent absorbant ou réfléchissant la lumière infrarouge, et a un maximum de transmittance dans la plage de longueur d'onde s'étendant de 590 à 660 nm sur la courbe de transmittance, la transmittance de lumière au maximum de transmittance étant non inférieure à 30%, et la transmittance de lumière à n'importe quelle longueur d'onde dans la plage de longueur d'onde s'étendant de 470 à 550 nm étant non inférieure à 15%.

3. Utilisation d'un matériau moulé, selon l'une des revendications 1 ou 2, dans laquelle le colorant organique ayant un maximum d'absorption au voisinage de la longueur d'onde centrale sur la courbe de visibilité relative standard est un composé de squarylium de formule (I) : 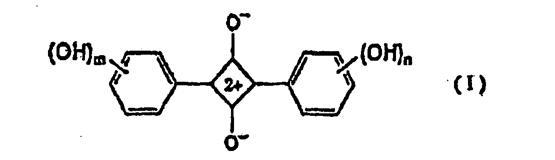 dans laquelle m et n sont identiques ou différents et représentent des entiers de 1 à 4.

4. Utilisation d'un matériau moulé, selon l'une des revendications 1, 2 ou 3, dans laquelle un élément polarisant est formé avec le matériau de base de résine synthétique en une seule pièce.

5. Utilisation d'un matériau moulé, selon l'une des revendications 1, 2, 3 ou 4, dans laquelle le système d'observation d'une image en couleur est une fenêtre pour une vision dans des bus de tourisme.

6. Utilisation d'un matériau moulé, selon l'une des revendications 1, 2, 3 ou 4, dans laquelle le dispositif d'affichage électrique d'un dispositif affichant des images en couleur est un tube cathodique, un dispositif d'affichage fluorescent sous vide, un panneau électroluminescent, une diode électroluminescente, un panneau d'affichage à plasma, une lampe à incandescence, un dispositif d'affichage laser, un dispositif d'affichage à cristaux liquides ou un dispositif d'affichage électrochromique.
